# EUROPEAN PATENT APPLICATION

(11) **EP 2 517 980 A1**
(43) Date of publication of application: **31.10.2012**
(21) Application number: 11157190.7
(22) Date of filing: 07.03.2011
(51) Int. Cl.: B65D 90/02, B65D 90/50

(54) **Lined device, method for manufacturing a lined device, lining inspection method and composition for forming a lining inspection coating**

(71) Applicant: BASF SE, 67056 Ludwigshafen (DE)
(72) Inventor: The designation of the inventor has not yet been filed

(57) **Abstract**

Disclosed herein are a method and a composition which may be used in the inspection of breakage, e.g., pinhole and other through-hole defects, in the lining of a lined device.

## Description

### BACKGROUND OF THE INVENTION

### 1. Field of the Invention

The present invention relates to a method of detecting lining breakage applicable to a lined device, such as a fixed lined storage tank, a lined tank car, or other lined devices.

### 2. Description of the Prior Art

A lined device is used for containing strong acids, strong bases, and chemicals that are highly corrosive or must meet high purity standards. Lining is to prevent high purity products becoming contaminated and add functions such as corrosion resistance and abrasion resistance to the base material of the device by creating a coating of a different material.

To accommodate the rapid development of the semiconductor industry in recent years, lined devices have been widely applied in the storage of electronics-grade chemicals. Factors contributing to deterioration of the quality of a chemical product stored in a lined device may include a substandard source of the chemical product, a contaminated transportation pipeline or pump, or a pinhole in the lining, etc. In other words, when the chemicals stored in a lined device are found to be contaminated, the source of the contamination cannot be identified rapidly and accurately. In most cases, sealed systems are adopted, further complicating efforts to determine cause of deterioration.

When a pinhole (breakage) in the lining of a lined device is suspected to be the source of contamination, visual inspection and other simple inspection methods cannot immediately and accurately reveal the pinhole (breakage) in the lining of the lined device. Currently, effective inspection requires entering the device and inspecting the lining for breakage with a pinhole tester.

Generally, to determine whether a pinhole has been introduced to the lining, production must be stopped, the residual chemical products discharged, the device cleaned, the connecting pipelines disconnected, and finally, the device must be sent to a specialized factory for slotting and inspecting with a pinhole tester. If the pinhole is discovered in time, the lining may be partially repaired; if not and if a great deal of the stored chemical leaks into a binding agent of the lining, the lining needs to be relined, and what is worse, the housing may be corroded. On the other hand, if no pinhole is found, the contamination may come from sources other than a defective lining so that all the procedures searching for the pinhole in the lining are in vain, wasting time and cost.

Thus, there is a need for a novel lining inspection method that overcomes the problems existing in current lining inspection methods.

### SUMMARY OF THE INVENTION

Disclosed herein are non-limiting embodiments of a method and a composition which may be used in the inspection of breakage, e.g., pinhole and other through-hole defects, in the lining of a lined device. In the lining inspection method, the nature of the chemical product stored in the lined device needs to be considered first, so as to select an appropriate ingredient that is substantially not found in the chemical product to serve as a lining inspection agent. In the manufacturing of the lined device, the lining inspection agent is mixed with the binding agent, and is coated between the lining and the device. Once a threshold quantity of the lining inspection agent appears in the chemical product, it can be determined that a pinhole (breakage) has occurred in the lining.

An object of the present invention is to provide a lined device for containing chemicals, which comprises a lining, a base material and a lining inspection coating between the lining and the base material, wherein the lining inspection coating comprises a lining inspection agent and a binding agent. With the lined device according to the present invention, whether the lining of a lined device has a pinhole (breakage) can be determined without performing complex procedures.

Another object of the present invention is to provide a method for manufacturing a lined device for containing chemicals, comprising the steps of:
i) providing a device;
ii) applying a lining inspection coating composition onto the surface to be lined of the device, wherein the lining inspection coating composition comprises a lining inspection agent and a binding agent; and
iii) attaching a lining onto the surface to be lined of the device after said surface is coated with the lining inspection coating composition.

Yet another object of the present invention is to provide a method for inspecting breakage, e.g., pinhole and other through-hole defects, in the lining of a lined device, which comprises the steps of:
i) providing a lined device for containing chemicals, which comprises a lining inspection coating between the lining and the device, wherein the lining inspection coating comprises a lining inspection agent and a binding agent;
ii) filling or soaking the lined device with a chemical product; and
iii) sampling the chemical product and analyzing for the level of the lining inspection agent in the chemical product.

Still another object of the present invention is to provide a lining inspection coating composition comprising a lining inspection agent and a binding agent. The lining inspection coating composition according to the present invention is used to form a lining inspection coating between the lining and the base material of in a lined device, which is useful for inspecting breakage, e.g., pinhole and other through-hole defects, in the lining of a lined device.

The present invention has the following advantages: 1) whether the lining of a lined device is broken can be determined without performing complex procedures such as slotting, tank cleaning and the like; 2) the condition of a lining can be definitely determined by excluding other interference factors; and 3) the present invention can be widely applied to quality monitoring for special-purpose chemical product devices and save cost and time.

### BRIEF DESCRIPTION OF THE DRAWINGS

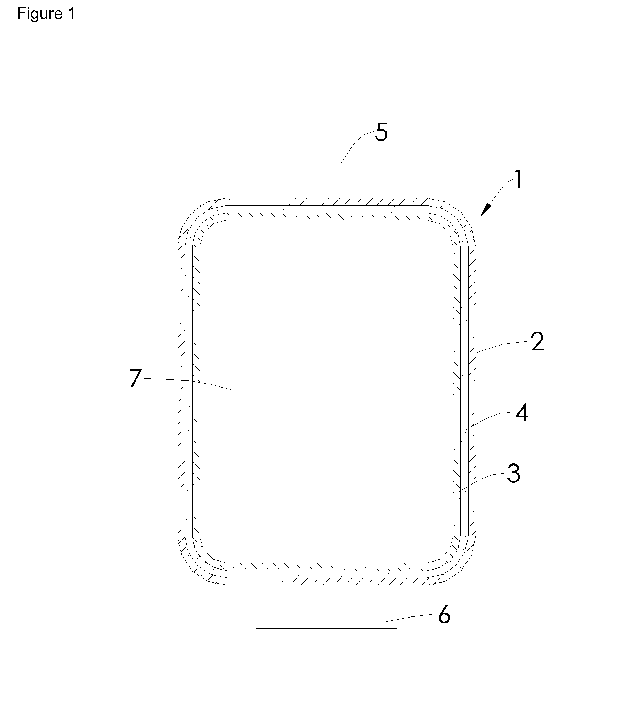

Fig. 1 is a cross-section of a lined device according to the present invention.

### DESCRIPTION OF THE PREFERRED EMBODIMENTS

The invention will now be described by a detailed description of several embodiments of the invention. It is clear that other embodiments of the invention can be configured according to the knowledge of persons skilled in the art without departing from the true spirit or technical teaching of the invention, the invention not being limited thereto.

In accordance with the present invention, there is provided a lined device for containing chemicals, in particular corrosive chemicals and electronics-grade chemicals, such as organic and inorganic acids, bases, solvents, reagents, in particular those of extremely high purity.

In the context of the present invention, the term "lined device" means a device whose base material is applied with a lining. The lining is made of a different material of suitable nature so as to add functions such as corrosion resistance and abrasion resistance to the base material.

In one embodiment, the present invention is directed to a lined device for containing chemicals, which comprises a lining inspection coating between the lining and the base material of the device, wherein the lining inspection coating comprises a lining inspection agent and a binding agent.

The lined device according to the present invention is suitable for containing chemicals, in particular for storage and transportation of corrosive chemicals and electronics-grade chemicals, such as organic and inorganic acids, bases, solvents, reagents, etc. The term "electronics-grade chemicals" is used herein to refer to chemicals used in the electronics industry, particularly in semi-conductor/micro processor fabrication, which usually require a high purity. The lined device according to the present invention is thus suitable for containing various chemicals, including those of electronics-grade, for example, sulfuric acid, nitric acid, phosphoric acid, hydrofluoric acid, hydrochloric acid, glacial acetic acid, ammonia solution, hydrogen peroxide, ammonium fluoride, Tetramethylammonium Hydroxide (TMAH), Dimethyl sulfoxide (DMSO), N-Methyl-2-Pyrrolidone (NMP), sodium hydroxide, potassium hydroxide, copper sulfate and a mixture thereof. Typically, the chemicals are in the form of a liquid or an aqueous solution.

In the context of the present invention, the term "lining inspection coating" refers to a coating layer applied between the lining and the base material of a lined device for inspecting the lining for breakage.

In accordance with the present invention, the lining inspection coating is formed from a lining inspection coating composition comprising a lining inspection agent and a binding agent. The lining inspection coating composition according to the present invention can be used for attaching a lining to the base material of a device and thus forms a lining inspection coating between the lining and the base material of the lined device for inspecting breakage, e.g., pinhole and other through-hole defects, in the lining of the lined device.

In the context of the present invention, the term "lining inspection agent" refers to a chemical element that is substantially neither found in the chemical product to be contained in the lined device according to the present invention nor found in the binding agent to be mixed therewith. When the lining of the lined device according to the invention has a defect, the lining inspection agent in the lining inspection coating will penetrate into the chemical product contained in the lined device through the defect and be detected by a routine analysis. Once a threshold quantity of the lining inspection agent appears in the chemical product, it can be determined that a pinhole (breakage) has occurred in the lining of the lined device.

For the purpose of the present invention, various chemical elements in the Periodic Table can be used as the lining inspection agent in the lining inspection coating according to the present invention. For example, aluminum (Al), antimony (Sb), arsenic (As), barium (Ba), beryllium (Be), bismuth (Bi), boron (B), cadmium (Cd), calcium (Ca), chromium (Cr), cobalt (Co), copper (Cu), gallium (Ga), germanium (Ge), gold (Au), indium (In), iron (Fe), lead (Pb), lithium (Li), magnesium (Mg), manganese (Mn), molybdenum (Mo), nickel (Ni), niobium (Nb), palladium (Pd), platinum (Pt), potassium (K), selenium (Se), silicon (Si), silver (Ag), sodium (Na), strontium (Sr), tantalum (Ta), thallium (TI), tin (Sn), titanium (Ti), tungsten (W), vanadium (V), zinc (Zn) or zirconium (Zr) may be used as a lining inspection agent in the lining inspection coating according to the present invention.

In principle, the factors to be considered when selecting a chemical element as the lining inspection agent according to the present invention include: (a) the chemical element is substantially neither found in the chemical product to be contained in the lined device nor found in the binding agent to be mixed therewith for forming a lining inspection coating composition according to the present invention; (b) the chemical element is preferably environmentally friendly; and (c) low cost. Thus, the lining inspection agent according to the present invention is preferably selected from Sn, Mn, Ba, Ti and Ge. Most preferably, the lining inspection agent is Sn.

For the purpose of the present invention, the lining inspection agent should be of submicron-size. That is, the particle size of the lining inspection agent is less than 1 µm such that the lining inspection agent can easily penetrate through the breakage for inspection of micro-defects.

In the context of the present invention, the term "threshold quantity" means the level of the lining inspection agent in the chemical contained in the lined device, which has increased and significantly exceeds the average increased level of the other elements in the chemical after the lined device standing for a period of time. For example, in one embodiment, the level by which the lining inspection agent (Sn) has increased after the lined device standing for seven days is about 868 ppb, which is significantly exceeds the average increased level of 1.2 ppb of the other elements in the chemical contained in the lined device.

In the context of the present invention, the term "binding agent" is an adhesive, or glue, that adheres or bonds the lining and the base material of a lined device together. All the polymers that have an adhesive property can be used as the binding agent in the present invention. The binding agent includes, for example, rubber and epoxy adhesive, such as, butene rubber, epoxy resin, etc. In the manufacture of a lined device, a "binding agent" is also referred to as an "adhesive", and thus the "binding agent" and the "adhesive" may be used interchangeably in the specification of the present invention.

The amounts of the lining inspection agent and the binding agent are not particularly required, provided that the lining can be sufficiently attached to the device and the level of the lining inspection agent exceeds the threshold quantity of the lining inspection agent. For the purpose of the present invention, the weight ratio of the lining inspection agent to the binding agent is preferably in the range of 1:1 to 1:10 so that a sufficient adhesion of the lining to the base material of the lined device may be obtained and the concentration of the lining inspection agent in the chemicals would not be too low to be detected for analysis. In particular, the weight ratio of the lining inspection agent to the binding agent may be 1:1, 1:2, 1:3, 1:4, 1:5, 1:6, 1:7, 1:8, 1:9 or 1:10. More preferably, the lining inspection agent and the binding agent are present in the lining inspection coating composition in a weight ratio of 1:1.

Accordingly, the present invention is further directed to a composition for forming lining inspection coating in a lined device for containing a chemical, wherein the lined device comprises a lining and a base material, and the lining inspection coating is formed between the lining and the based material, comprising a lining inspection agent which is a chemical element that is substantially not found in the chemical to be contained in the lined device; and a binding agent for adhering or bonding the lining and the base material of the lined device together, wherein the weight ratio of the lining inspection agent to the binding agent is in the range of 1:1 to 1:10.

In another embodiment, the present invention is directed to a method for manufacturing a lined device for containing chemicals according to the present invention, comprising the steps of
i) providing a device;
ii) applying a lining inspection coating composition onto the surface to be lined of the device, wherein the lining inspection coating composition comprises a lining inspection agent which is a chemical element that is substantially not found in the chemical to be contained in the lined device, and a binding agent for adhering or bonding the lining to the surface to be lined of the device,
   wherein the weight ratio of the lining inspection agent to the binding agent is in the range of 1:1 to 1:10; and
iii) attaching a lining onto the surface to be lined of the device after said surface is coated with the lining inspection coating composition.

The method for manufacturing a lined device for containing chemicals and the method for lining inspection according to the present invention can be used in any type of lined devices and in any type of lining techniques. In other words, the lined devices to be inspected for breakage are manufactured in a usual manner, except that a lining inspection coating composition comprising a lining inspection agent and a binding agent according to the present invention is used for attaching the lining to the device, and thus a lining inspection coating is present between the lining and the base material of the device.

Fig. 1 is a cross-section of a lined device (1) comprising a lining inspection coating according to the present invention. The lined device has a cylindrical hollow body (2); a lining (3); and a lining inspection coating (4) between the inner surface of the body (2) and the back surface of the lining (4). There are flanges (5) and (6) respectively on the top and at the bottom of the lined device (1), which are also lined in the same way as the body of the lined device. A space (7) defined by the hollow body (2) in the lined device (1) is used to contain a chemical.

Depending on the purposes of the lined devices, the amount and position of the flanges can vary. In an embodiment of the present invention, one of the flanges (5) and (6) may be omitted. In another embodiment of the present invention, one or both of the flanges (5) and (6) may be positioned on the lateral side of the lined device (1). In yet another embodiment of the present invention, there may be one or more additional flanges (not shown) on the top, bottom or lateral side of the lined device (1).

The size, shape and type of the lined device are not particularly limited. The lined device can be made up of different sizes, materials and shapes depending on the intended use or application of the lined device and the nature of the chemical to be contained. Examples of the lined device include, for example, a fixed lined storage tank, a lined tank car, a lined pipeline, a lined heat exchanger, a lined valve, a lined pump or other devices requiring lining in terms of the use. In some cases, two or more lined devices according to the present invention may be used in combination with each other.

The body of the lined device may be made of base material such as, for example, stainless steel, iron parts, glass fibers, fluorocarbon resin, polyethylene (PE), polypropylene (PP), fiber reinforced plastic (FRP), glass reinforced plastic (GRP) and other materials suitable for forming a body of a chemical container.

Materials useful as a lining for the lined device include, for example, polytetrafluoroethylene (PTFE), polyethylene (PE), polypropylene (PP), fluorocarbon resin, polyvinyl chloride (PVC), chlorinated polyvinyl chloride (C-PVC), polyvinylene difluoride (PVDF), ethylene-chlorotrifluoroethylene (ECTFE), fluoroethylenepropylene (FEP), tetrafluorometoxil (TFM), perfluoro alkoxy resin (PFA), etc.

In another embodiment, the present invention is directed to a method for inspecting breakage, e.g., pinhole and other through-hole defects, in the lining of a lined device, which comprises the steps of:
i) providing a lined device for containing chemicals, which comprises a lining inspection coating between the lining and the device, wherein the lining inspection coating comprises a lining inspection agent and a binding agent;
ii) filling or soaking the lined device with a chemical product; and
iii) sampling the chemical product and analyzing for the level of the lining inspection agent in the chemical product.

According to the present invention, whether the lining of a lined device has a pinhole or breakage can be determined by spectrum analysis, in particular mass spectrometry (MS), for example, inductively coupled plasma mass spectrometry (ICP-MS). Once a threshold quantity of the lining inspection agent is present in the chemical contained in the lined device, it can be determined that a pinhole or breakage has occurred in the lining.

With the lined device according to the present invention, whether a breakage or pinhole occurs in the lining can be determined before, during or after use of the lined device. For example, before using a lined device according to the present invention to store or transport a chemical, the lined device can be filled with the chemical and immediately analyzed for the level of the lining inspection agent in the chemical. After standing for a period of time, for example, several days or weeks, another analysis is conducted for the level of the lining inspection agent in the chemical contained in the lined device. If the level of the lining inspection agent in the chemical is significantly increased after standing for the period of time, a breakage can be determined to have occurred in the lining. Similarly, during the storage or transportation of a chemical with a lined device according to the present invention, periodically sampling and analyzing the chemical for the level of the lining inspection agent can monitor the condition of the lining. Once the lining is determined to have a breakage/pinhole, the lined device should be replaced or relined.

The following example is provided to further illustrate how to detect a breakage/pinhole of a lining in a lined device according to the present invention. However, the example is not intended to be all inclusive and not intended to limit the scope of the inventions described herein.

### TEST EXAMPLE

### Materials and Apparatus

Test Tool: 1 L SUS/PTFE (stainless steel/polytetrafluoroethylene) lining bottle (from SUN FLUORO SYSTEM CO., LTD.)
Lining inspection agent: tin powder (from Ceramet, Inc., Taiwan)
Binding agent: butene rubber (from SUN FLUORO SYSTEM CO., LTD.)
Lining: PTFE (APV, DAIKIN INDUSTRIES, LTD.)
Chemical: 70% aqueous solution of electronics-grade nitric acid (HNO₃) (BASF)
Analysis apparatus: Agilent 7500ce ICP-MS

### Steps:

1. The tin powder (lining inspection agent) and the binding agent were mixed in a ratio of 1:1 by weight.
2. The mixture obtained in step 1 was uniformly coated on a surface of a lining twice, and the lining was attached to a flange at the bottom of the 1 L SUS/PTFE lining bottle.
3. The lining was pierced by using a fine needle.
4. A 70% aqueous solution of electronics-grade HNO₃ was fed into the 1 L SUS/PTFE lining bottle and the bottle was immediately sent to the laboratory for ICP-MS analysis for the initial level of elements in the electronics-grade HNO₃ solution.
5. The bottle was sent to the laboratory for a further analysis for the level of elements in the electronics-grade HNO₃ solution after standing still for seven days.

The ICP-MS analysis data for the levels of elements in the electronics-grade HNO₃ solution in the 1 L SUS/PTFE lining bottle are set forth in Table 1 below.

**Table 1: ICP-MS analysis data of the electronics-grade HNO₃**

| Element | Level in HNO₃ solution as received (ppb) | Initial Level in HNO₃ solution in the test lined device (ppb) | Level in HNO₃ solution after seven days in the test lined device (ppb) |
|---|---|---|---|
| Al | 0.005 | 5.894 | 9.439 |
| Sb | 0.001 | 0.008 | 0.021 |
| As | 0.005 | 0.005 | 0.013 |
| Ba | 0.005 | 0.043 | 0.067 |
| Be | 0.005 | 0.005 | 0.005 |
| Bi | 0.001 | 0.002 | 0.036 |
| B | 0.03 | 0.03 | 0.03 |
| Cd | 0.001 | 12.21 | 13.95 |
| Ca | 0.016 | 39.78 | 53.59 |
| Cr | 0.147 | 1.506 | 2.06 |
| Co | 0.001 | 0.154 | 0.17 |
| Cu | 0.005 | 0.139 | 0.344 |
| Ga | 0.001 | 0.003 | 0.001 |
| Ge | 0.005 | 0.005 | 0.005 |
| Au | 0.001 | 0.001 | 0.001 |
| In | 0.001 | 1.02 | 4.698 |
| Fe | 0.03 | 7.714 | 5.833 |
| Pb | 0.002 | 0.152 | 0.224 |
| Li | 0.005 | 0.036 | 0.025 |
| Mg | 0.005 | 191.6 | 188.8 |
| Mn | 0.001 | 0.125 | 0.165 |
| Mo | 0.001 | 0.001 | 0.023 |
| Ni | 0.005 | 5.785 | 7.133 |
| Nb | 0.001 | 0.001 | 0.009 |
| Pd | 0.001 | 0.005 | 0.003 |
| Pt | 0.005 | 0.005 | 0.005 |
| K | 0.005 | 2.821 | 3.839 |
| Se | 0.1 | 0.1 | 0.1 |
| Si | 0.05 | 0.05 | 0.05 |
| Ag | 0.001 | 0.007 | 0.224 |
| Na | 0.005 | 3.08 | 5.607 |
| Sr | 0.001 | 0.147 | 0.171 |
| Ta | 0.001 | 0.001 | 0.021 |
| TI | 0.001 | 0.001 | 0.001 |
| Sn | 0.001 | 267.9 | 1136 |
| Ti | 0.005 | 0.154 | 0.228 |
| W | 0.001 | 0.001 | 0.001 |
| V | 0.001 | 0.018 | 0.023 |
| Zn | 0.005 | 68.16 | 63.77 |
| Zr | 0.001 | 0.006 | 0.022 |

### Data Analysis:

1. Due to the breakage of the lining, the initial level of tin (Sn) in the HNO₃ solution in the test lined device was obviously higher than the other elements.
2. After standing still for seven days, the level of Sn in the HNO₃ solution in the test lined device was significantly increased while the levels of the other elements in the HNO₃ solution in the test lined device were not significantly increased or changed, which indicates that the lining was broken so that Sn was released from the lining inspection coating through the breakage of the lining into the hydrochloride solution, leading to the dramatic increase of the level of Sn in the HNO₃ solution in the test lined device.

### EQUIVALENTS

While this invention has been particularly shown and described with references to preferred embodiments thereof, it will be understood by those skilled in the art that various changes in form and details may be made therein without departing from the scope of the invention encompassed by the appended claims.

## Claims

1. A lined device for containing a chemical, which comprises a lining, a base material, and a lining inspection coating between the lining and the base material, wherein the lining inspection coating comprises a lining inspection agent that is a chemical element substantially not found in the chemical to be contained in the lined device, and a binding agent for adhering or bonding the lining and the base material of the lined device together, wherein the weight ratio of the lining inspection agent to the binding agent is in the range of 1:1 to 1:10,whereby upon the lining of the lined device having a defect, the lining inspection agent in the lining inspection coating will penetrate into the chemical contained in the lined device through the defect and be detected for indication of the defect.

2. The lined device according to claim 1, which is selected from the group consisting of a fixed lined storage tank, a lined tank car, a lined pipeline, a lined heat exchanger, a lined valve, a lined pump and other devices requiring lining in terms of the use.

3. The lined device according to claim 1, wherein the device is made of a material selected from the group consisting of stainless steel, iron parts, glass fibers, fluorocarbon resin, polyethylene (PE), polypropylene (PP), fiber reinforced plastic (FRP) and glass reinforced plastic (GRP).

4. The lined device according to claim 1, wherein the lining inspection agent is a chemical element selected from the group consisting of aluminum (Al), antimony (Sb), arsenic (As), barium (Ba), beryllium (Be), bismuth (Bi), boron (B), cadmium (Cd), calcium (Ca), chromium (Cr), cobalt (Co), copper (Cu), gallium (Ga), germanium (Ge), gold (Au), indium (In), iron (Fe), lead (Pb), lithium (Li), magnesium (Mg), manganese (Mn), molybdenum (Mo), nickel (Ni), niobium (Nb), palladium (Pd), platinum (Pt), potassium (K), selenium (Se), silicon (Si), silver (Ag), sodium (Na), strontium (Sr), tantalum (Ta), thallium (TI), tin (Sn), titanium (Ti), tungsten (W), vanadium (V), zinc (Zn) and zirconium (Zr).

5. The lined device according to claim 4, wherein the lining inspection agent is a chemical element selected from the group consisting of Sn, Mn, Ba, Ti and Ge.

6. The lined device according to claim 5, wherein the lining inspection agent is Sn element.

7. The lined device according to claim 1, wherein the binding agent in the lining inspection coating is a polymer having an adhesive property.

8. The lined device according to claim 1, wherein the binding agent is a polymer selected from butene rubber and epoxy resin.

9. The lined device according to claim 1, wherein the lining is a polymer selected from polytetrafluoroethylene (PTFE), polyethylene (PE), polypropylene (PP), fluorocarbon resin, polyvinyl chloride (PVC), chlorinated polyvinyl chloride (C-PVC), polyvinylene difluoride (PVDF), ethylene-chlorotrifluoroethylene (ECTFE), fluoroethylenepropylene (FEP), tetrafluorometoxil (TFM) and perfluoro alkoxy resin (PFA).

10. The lined device according to claim 1, wherein the chemical is selected from corrosive chemicals and electronics-grade chemicals.

11. The lined device according to claim 1, wherein the chemical is selected from sulfuric acid, nitric acid, phosphoric acid, hydrofluoric acid, hydrochloric acid, glacial acetic acid, ammonia solution, hydrogen peroxide, ammonium fluoride, Tetramethylammonium Hydroxide (TMAH), Dimethyl sulfoxide (DMSO), N-Methyl-2-Pyrrolidone (NMP), sodium hydroxide, potassium hydroxide, copper sulfate and a mixture thereof.

12. A method for manufacturing a lined device for containing chemicals, which comprises the steps of:
i) providing a device;
ii) applying a lining inspection coating composition onto the surface to be lined of the device, wherein the lining inspection coating composition comprises a lining inspection agent which is a chemical element that is substantially not found in the chemical to be contained in the lined device, and a binding agent for adhering or bonding the lining to the surface to be lined of the device, wherein the weight ratio of the lining inspection agent to the binding agent is in the range of 1:1 to 1:10; and
iii) attaching a lining onto the surface to be lined of the device after said surface is coated with the lining inspection coating composition.

13. A method for inspecting breakage in the lining of a lined device for containing chemicals, which comprises the steps of:
i) providing a lined device according to claim 1 or a lined device manufactured by the method according to claim 12;
ii) filling or soaking the lined device with a chemical; and
iii) sampling the chemical and analyzing for the level of the lining inspection agent in the chemical.

14. The method according to claim 13, wherein the level of the lining inspection agent in the chemical is determined by spectrum analysis.

15. A composition for forming lining inspection coating in a lined device for containing a chemical, wherein the lined device comprises a lining and a base material, and the lining inspection coating is formed between the lining and the based material, comprising a lining inspection agent which is a chemical element that is substantially not found in the chemical to be contained in the lined device; and a binding agent for adhering or bonding the lining and the base material of the lined device together, wherein the weight ratio of the lining inspection agent to the binding agent is in the range of 1:1 to 1:10.
